# EUROPEAN PATENT APPLICATION

(11) **EP 4 447 168 A1**
(43) Date of publication of application: **16.10.2024**
(21) Application number: 23740508.9
(22) Date of filing: 13.01.2023
(51) Int. Cl.: H01M 4/66, H01M 4/04, H01M 10/0525, C23C 2/12, C23C 2/04, H01M 4/70, H01M 4/13, H01M 10/052

(54) **CURRENT COLLECTOR COMPRISING ADHESION-REINFORCING LAYER, POSITIVE ELECTRODE COMPRISING SAME, AND LITHIUM SECONDARY BATTERY COMPRISING POSITIVE ELECTRODE**

(30) Priority: 14.01.2022 KR 20220005880; 14.01.2022 KR 20220005881
(71) Applicant: LG Chem, Ltd., Yeongdeungpo-gu Seoul 07336 (KR); LG Energy Solution, Ltd., Seoul 07335 (KR)
(72) Inventor: SEO, Jung Hyun, Daejeon 34122 (KR); KIM, Min Soo, Daejeon 34122 (KR); SHIN, Dong Oh, Daejeon 34122 (KR); LEE, Ho Chan, Daejeon 34122 (KR); YOO, Kwang Ho, Daejeon 34122 (KR); JUNG, Soon Hwa, Daejeon 34122 (KR)
(74) Representative: Hoffmann Eitle
(86) International application number: PCT/KR2023/000677
(87) International publication number: WO 2023/136665

(57) **Abstract**

The present invention relates to a collector including an adhesion enhancing layer capable of providing a positive electrode having excellent adhesion and low interfacial resistance, a positive electrode including the same, and a lithium secondary battery including the positive electrode, and provides a collector including a conductive metal layer, and an adhesion enhancing layer provided on at least one surface of the metal layer, wherein the adhesion enhancing layer has a surface roughness (Ra) of 90 nm to 600 nm and a diiodomethane contact angle of 70° to 120°, a positive electrode including the same, and a lithium secondary battery including the positive electrode.

## Description

### TECHNICAL FIELD

### Cross-reference to Related Applications

This application claims the benefit of Korean Patent Application Nos. 10-2022-0005880 and 10-2022-0005881, filed on January 14, 2022, in the Korean Intellectual Property Office, the disclosure of which is incorporated herein in its entirety by reference.

### Technical Field

The present invention relates to a collector including an adhesion enhancing layer capable of providing a positive electrode having excellent adhesion and low interfacial resistance, a positive electrode including the same, and a lithium secondary battery including the positive electrode.

### BACKGROUND ART

Recently, there has been a rising demand for highcapacity, high-output, and high-stability lithium secondary batteries as an application area of lithium secondary batteries has rapidly expanded to power storage supply of large-area devices, such as automobiles and power storage devices, as well as power supply of electronic devices such as electrical, electronic, communication, and computer devices.

The lithium secondary batteries are generally manufactured in a way that a slurry in which a positive electrode active material capable of intercalating and deintercalating lithium ions or a negative electrode active material capable of absorbing and desorbing lithium ions, and optionally a binder and a conductive material are mixed is applied to each of a positive electrode collector and a negative electrode collector, and a solvent is removed by heat or the like to manufacture a positive electrode and a negative electrode, and the positive electrode and the negative electrode are stacked on both sides of a separator to form an electrode collector having a predetermined shape, and then the electrode collector and a non-aqueous electrolyte are inserted into a battery case.

Meanwhile, the manufacturing of the positive electrode and the negative electrode requires energy to remove the solvent, resulting in high costs, making it difficult to improve productivity, and accordingly, a dry manufacturing method in which each active material is placed on a collector in the form of a film and subjected to passing through a pressing roll has been proposed.

However, when an electrode active material is applied onto a collector in a dry method without a solvent in the case of a high-loading electrode, adhesion between the collector and an electrode layer is weak, and thus, a method of providing a primer layer capable of enhancing the adhesion between the collector and the electrode layer has been suggested.

The primer layer is typically composed of a binder and a conductive material, and the binder melts upon hightemperature roll pressing to secure adhesion and the conductive material serves to lower interfacial resistance. However, when the primer layer is composed of only a binder and a conductive material, the primer layer has weak scratch resistance, resulting in poor physical properties, and when a polymer material is added to make up for the downside, degradation in adhesion or an increase in interfacial resistance is caused.

### [Related Art Document]

### [Patent Document] KR10-2020-0017821A

### DISCLOSURE OF THE INVENTION

### TECHNICAL PROBLEM

The present invention is to resolve the limitations of the related art, and thus, an aspect of the present invention provides a collector including an adhesion enhancing layer having excellent adhesion and low interfacial resistance.

In addition, another aspect of the present invention provides a positive electrode provided with a positive electrode active material layer on the collector.

In addition, another aspect of the present invention provides a lithium secondary battery including the positive electrode.

### TECHNICAL SOLUTION

In order to address the above-described tasks, the present invention provides a collector including an adhesion enhancing layer having excellent adhesion and low interfacial resistance, a positive electrode including the collector, and a lithium secondary battery including the positive electrode.
(1) According to an aspect of the present invention, there is provided a collector including a conductive metal layer, and an adhesion enhancing layer provided on at least one surface of the metal layer, wherein the adhesion enhancing layer has a surface roughness (Ra) of 90 nm to 600 nm and a diiodomethane contact angle of 70° to 120°.
(2) The present invention provides the collector according to (1) above, wherein an outermost surface of the surface provided with the adhesion enhancing layer includes an Al element in an amount of 40 wt% to 75 wt%, a C element in an amount of 20 wt% to 50 wt%, an O element in an amount of 0.5 wt% to 5 wt%, and an F element in an amount of 2 wt% to 10 wt%.
(3) The present invention provides the collector according to (1) or (2) above, wherein an outermost surface of the surface provided with the adhesion enhancing layer includes an Al element in an amount of 45 wt% to 70 wt%, a C element in an amount of 30 wt% to 50 wt%, an O element in an amount of 1 wt% to 5 wt%, and an F element in an amount of 5 wt% to 10 wt%.
(4) The present invention provides the collector according to any one of (1) to (3) above, wherein a weight ratio of the F element to the Al element in an outermost surface of the surface provided with the adhesion enhancing layer is 0.05 to 0.17 (F element/Al element).
(5) The present invention provides the collector according to any one of (1) to (4) above, wherein the adhesion enhancing layer has a surface roughness (Ra) of 100 nm to 550 nm.
(6) The present invention provides the collector according to any one of (1) to (5) above, wherein the adhesion enhancing layer has a diiodomethane contact angle of 80° to 110°.
(7) The present invention provides the collector according to any one of (1) to (6) above, wherein the adhesion enhancing layer has a thickness of 200 nm or greater and less than 1500 nm.
(8) The present invention provides the collector according to any one of (1) to (7) above, wherein the adhesion enhancing layer has a dot shape.
(9) The present invention provides the collector according to any one of (1) to (8) above, wherein the adhesion enhancing layer includes a fluorine-based polymer binder and a conductive material.
(10) The present invention provides the collector according to (9) above, wherein the fluorine-based polymer binder is polyvinylidene fluoride (PVDF) or a vinylidene fluoride-hexafluoropropylene copolymer (PVDF-co-HFP).
(11) The present invention provides the collector according to (9) or (10) above, wherein the fluorine-based polymer binder is a vinylidene fluoride-hexafluoropropylene copolymer (PVDF-co-HFP), and the fluorine-based polymer binder includes a vinylidene fluoride unit and a hexafluoropropylene unit in molecules in a weight ratio of 75:25 to 50:50.
(12) According to another aspect of the present invention, there is provided a positive electrode including the collector of any one of (1) to (11) above, and a positive electrode active material layer, wherein the positive electrode active material layer is provided on an adhesion enhancing layer of the collector.
(13) According to another aspect of the present invention, there is provided a lithium secondary battery including the positive electrode of (12) above, a negative electrode, a separator interposed between the positive electrode and the negative electrode, and an electrolyte.

### ADVANTAGEOUS EFFECTS

A collector according to the present invention includes an adhesion enhancing layer having a surface roughness and a diiodomethane contact angle in a specific range, and thus has excellent adhesion and low interfacial resistance.

In addition, a positive electrode according to the present invention has excellent adhesion and low interfacial resistance, and may thus exhibit excellent battery properties as a positive electrode active material layer is provided on the adhesion enhancing layer of the collector including the adhesion enhancing layer.

In addition, a lithium secondary battery of the present invention includes the positive electrode according to the present invention, and may thus have excellent battery properties.

### BRIEF DESCRIPTION OF THE DRAWINGS

The following drawings attached herein illustrate preferred examples of the present invention by example, and serve to enable technical concepts of the present invention to be further understood together with detailed description of the invention given below, and therefore the present invention should not be interpreted only with matters in such drawings.

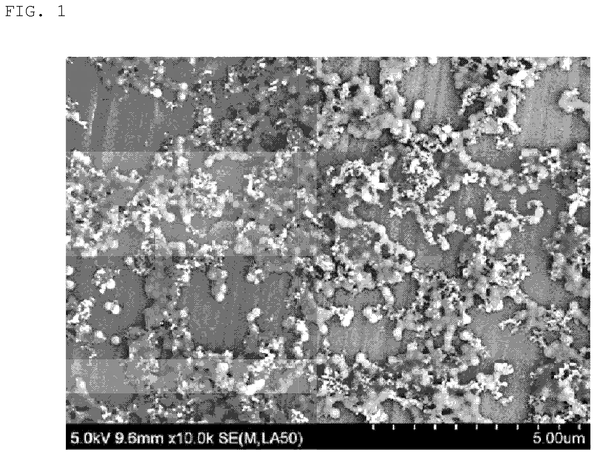

FIG. 1 is an SEM image of a surface of an adhesion enhancing layer of a collector manufactured in Example 1 according to an embodiment of the present invention.

### MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

### Definition of Terms

As used herein, the term 'surface roughness' refers to a degree of fine irregularities on a surface of an adhesion enhancing layer, and in particular, the surface roughness in the present invention is indicated by centerline average roughness, that is, arithmetic average roughness, and is presented as 'surface roughness (Ra)'.

As used herein, the term 'contact angle', a measure of the wettability of a solid surface, refers to an angle of liquid at a thermodynamic balance on a surface of a solid, and a low contact angle indicates high wettability (hydrophilicity) and high surface energy and a high contact angle indicates low wettability (hydrophobicity) and low surface energy. In addition, in the present invention, diiodomethane (CH₂I₂) is used as a solution for measuring a contact angle, and thus it is presented as a diiodomethane contact angle.

### Measurement method

Herein, the surface roughness (Ra) was measured using a laser microscope (VK-X100k, Keyence Co.), focusing on a surface of an adhesion enhancing layer at 150x magnification, and then performing laser scanning in an auto measure mode, setting the measurement standard in accordance with JIS B0601:2001, and selecting all areas as a measurement area to measure Ra for an entire area. A Ra value for each sample was measured by moving the measurement location of the sample and measuring Ra at 10 places on a surface of an adhesion enhancing layer, and presenting an average value thereof.

Herein, the diiodomethane contact angle was measured and analyzed using a contact angle analyzer (KRUSS DSA100) and a dedicated measurement program (ADVANCE Software). Specifically, 3 µl of diiodomethane was placed on an adhesion enhancing layer in the form of droplets, and the angle between the adhesion enhancing layer and diiodomethane was measured at intervals of 1 second for 10 seconds without delay. In the same manner, the location was changed to measure the angle between the adhesion enhancing layer and diiodomethane. The contact angle was measured for a total of 5 locations, and the results were presented as an average value. Meanwhile, upon the measurement, the orientation was set to sessile drop, the measurement method was set to Ellipse (Tangent-1), and the reference line was set to manual baseline.

### Collector

The present invention provides a collector applied to a positive electrode manufactured through a dry method without using a solvent in particular, and thus capable of providing high adhesion and low interfacial resistance.

According to an embodiment of the present invention, the collector may include a conductive metal layer, and an adhesion enhancing layer provided on at least one surface of the metal layer, and the adhesion enhancing layer has a surface roughness (Ra) of 90 nm to 600 nm and a diiodomethane contact angle of 70° to 120°.

In general, an electrode is manufactured by forming an active material layer on at least one surface of a metal collector, and in the case of a dry method, an active material thin film is placed on at least one surface of a metal collector and manufactured through roll pressing. However, when manufacturing a dry positive electrode, the adhesion between the metal collector and the positive electrode active material layer is weak as no solvent is not used, and accordingly, an electrode provided with a binder layer including a polymer binder and a conductive material as a primer layer between the metal collector and the positive electrode active material layer has been proposed. In this case, when the binder layer is thick, the interfacial resistance is increased, and conversely, when the binder layer is thin, there is no or insignificant improvement in adhesion.

The collector according to the present invention includes an adhesion enhancing layer having a controlled surface roughness and diiodomethane contact angle, and may thus have excellent adhesion and interfacial resistance together.

In addition, the collector according to the present invention modulates the thickness and pattern of the adhesion enhancing layer, the ratio of the binder and the conductive material used in the adhesion enhancing layer, and drying conditions to form an adhesion enhancing layer on a conductive metal, and accordingly, in the element amount measured on an outermost surface of a surface provided with the adhesion enhancing layer, Al element, C element, O element, and F element may all satisfy a specific range, and thus both adhesion and interfacial resistance may be excellent.

Hereinafter, the collector according to the present invention will be described in detail.

According to an embodiment of the present invention, the collector may include a conductive metal layer, and an adhesion enhancing layer provided on at least one surface of the metal layer, and the adhesion enhancing layer has a surface roughness (Ra) of 90 nm to 600 nm and a diiodomethane contact angle of 70° to 120°, and the adhesion enhancing layer has a dot shape.

Specifically, the adhesion enhancing layer may have a surface roughness (Ra) of 90 nm to 600 nm, more specifically 100 nm to 550 nm, and may also have a diiodomethane contact angle of 70° to 120°, more specifically 80° to 110°. In this case, the collector including the adhesion enhancing layer may have excellent adhesion with a positive electrode active material layer and may also have low interfacial resistance. In addition, when the surface roughness (Ra) of the adhesion enhancing layer is out of the above range, the adhesion between the collector and the positive electrode active material layer may be reduced.

As another example, the collector according to an embodiment of the present invention includes a conductive metal layer and an adhesion enhancing layer provided on at least one surface of the metal layer, and in the adhesion enhancing layer, an outermost surface of the surface provided with the adhesion enhancing layer may include an Al element in an amount of 40 wt% to 75 wt%, a C element in an amount of 20 wt% to 50 wt%, an O element in an amount of 0.5 wt% to 5 wt%, and an F element in an amount of 2 wt% to 10 wt%. In this case, the conductive metal may be aluminum.

Specifically, an outermost surface of the surface provided with the adhesion enhancing layer may include an Al element in an amount of 40 wt% to 70 wt%, a C element in an amount of 30 wt% to 50 wt%, an O element in an amount of 1 wt% to 5 wt%, and an F element in an amount of 5 wt% to 10 wt%.

As another example, an outermost surface of the surface provided with the adhesion enhancing layer includes an Al element, a C element, an O element, and an F element in an amount of 40% to 60%, 35% to 50%, 1% to 4%, and 5% to 9%, respectively, in atomic percent (At%).

In addition, in the adhesion enhancing layer, a weight ratio of F element to Al element in the adhesion enhancing layer may be 0.05 to 0.17 (F element/Al element), specifically 0.08 to 0.17.

In the present invention, the element amount (weight ratio (wt%) and atomic ratio (At%)) of the outermost surface of the surface provided with the adhesion enhancing layer was each measured through SEM-EDS analysis using FESEM (JSM7610F, Jeol Ltd.).

The outermost surface of the surface provided with the adhesion enhancing layer according to the present invention has the element amount described above, and accordingly, the adhesion with the positive electrode active material layer of the collector including the adhesion enhancing layer may be excellent and interfacial resistance may be low. In addition, as the Al element, the C element, the O element, and the F element each satisfy the amount described above, and also the ratio of the Al element and the F element satisfies the range described above, it is more beneficial for uniform improvements in adhesion and interfacial resistance.

In addition, the adhesion enhancing layer may be distributed in the form of an island on at least one surface of the metal layer, and specifically, the adhesion enhancing layer may have a dot shape, and in this case, the dot shape may be regular or irregular.

Meanwhile, in the present invention, the adhesion enhancing layer is provided in a pattern such as islands or dots without covering the entire surface of the metal layer, and thus a portion of the conductive metal layer is exposed, and accordingly, excellent adhesion and excellent interfacial resistance may be achieved. In addition, when the adhesion enhancing layer covers the entire conductive metal layer instead of a pattern such as islands or dots, interfacial resistance may be increased.

In addition, in the present invention, the surface roughness, the contact angle, and the element amount at the outermost surface of the adhesion enhancing layer may be affected by the pattern of the adhesion enhancing layer provided on the metal layer, the ratio of the fluorine-based polymer binder and the conductive material in the adhesion enhancing layer, and the coating amount and drying temperature of an adhesion enhancing layer slurry when forming the adhesion enhancing layer.

In addition, the adhesion enhancing layer may have a thickness of 50 nm or greater and less than 5000 nm, specifically 100 nm to 3000 mm, 100 nm to 2000 nm, 200 nm to 1000 nm, or 200 nm or greater and less than 500 nm, and when this is satisfied, excellent adhesion may be provided without an increase in interfacial resistance. In addition, when the thickness of the adhesion enhancing layer is within the above range, in particular when the thickness is 200 nm or greater and less than 500 nm, it is more beneficial for the surface roughness (Ra) to satisfy the above range.

As another example, the adhesion enhancing layer may have a thickness of 200 nm or greater and less than 1500 nm, specifically 200 nm to 1000 nm, in terms of the fact that it is beneficial for the ratio of the Al element, the C element, the O element, and the F element on the outermost surface of the surface provided with the adhesion enhancing layer to satisfy the above range. For example, the thickness of the adhesion enhancing layer may be affected by the application amount of an adhesion enhancing composition in a manufacturing method, which will be described later, and when the thickness of the adhesion enhancing layer is less than 200 nm, the application amount of the adhesion enhancing composition is inevitably reduced, and accordingly, the amount may be too small to be applied to the entire surface of aluminum metal or may be applied to be too thin to overexpose the conductive metal (in this case, aluminum) during the drying process. Conversely, when the thickness of the adhesion enhancing layer is 1500 nm or greater, the application amount of an adhesion enhancing composition is inevitably increased, and accordingly, an adhesion enhancing layer may be formed to cover the entire surface of the conductive metal even after the drying process as the amount is applied to be too thick on the entire surface of the conductive metal. As a result, the amounts of Al element, C element, O element, and F element on the outermost surface of the surface provided with the adhesion enhancing layer may not satisfy the conditions described above.

Meanwhile, in an embodiment of the present invention, a thickness of the adhesion enhancing layer may be measured through means common in the art, and for example, may be determined from TEM (transmission electrom microscope) or SEM (scanning electron microscope) images of a cross-section of a collector, and the TEM or SEM may be measured through a typical method known in the art.

In addition, the conductive metal layer includes a conductive metal having high conductivity, and the conductive metal is not particularly limited as long as it is non-reactive in the voltage range of a battery, and for example, stainless steel, aluminum, nickel, titanium, fired carbon, or aluminum or stainless steel that is surface-treated with one of carbon, nickel, titanium, silver, and the like may be used. In addition, the conductive metal layer may have a thickness of 3 um to 500 µm.

In addition, the adhesion enhancing layer may include a fluorine-based polymer binder and a conductive material.

As another example, the adhesion enhancing layer includes a fluorine-based polymer binder and a conductive material, and a weight ratio of the fluorine-based polymer binder and the conductive material may be 3:1 to 1:2, specifically 2.5:1 to 1:2, or 2:1 to 1:2, and in this case, interfacial resistance properties may be more excellent.

The fluorine-based polymer binder may include any fluorine-based polymer binder commonly known in the art without limitation, but specifically, the fluorine-based polymer binder may be polyvinylidene fluoride (PVDF) or a polyvinylidene fluoride-hexafluoropropylene copolymer (PVDF-co-HFP), and more specifically, the fluorine-based polymer binder may be a polyvinylidene fluoride-hexafluoropropylene copolymer (PVDF-co-HFP), and may include a vinylidene fluoride unit and a hexafluoropropylene unit in molecules in a weight ratio of 75:25 to 50:50.

As another example, the fluorine-based polymer binder may be a polyvinylidene fluoride-hexafluoropropylene copolymer (PVDF-co-HFP), may include a vinylidene fluoride unit and a hexafluoropropylene unit in molecules in a weight ratio of 75:25 to 50:50, may have a melting temperature (Tm) of 100 °C to 170 °C, and may have a weight average molecular weight of 500,000 g/mol to 1,500,000 g/mol. When the fluorine-based polymer binder is a polyvinylidene fluoride-hexafluoropropylene copolymer (PVDF-co-HFP) under these conditions, adhesion may be more excellent.

In addition, the adhesion enhancing layer may further include a water-soluble binder, and in this case, it is favorable to secure a better contact strength, and the water-soluble binder may be, for example, at least one type selected from carboxymethylcellulose (CMC), polyvinylpyrrolidone (PVP), styrene-butadiene rubber (SBR), and polyvinyl alcohol (PVA).

The conductive material serves to lower interfacial resistance and any conductive material may be used without particular limitation as long as it has electronic conductivity without causing chemical changes, and specifically the conductive material may be graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; conductive tubes such as carbon nanotubes; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

### Method for manufacturing a collector

In addition, the present invention provides a method for manufacturing the collector.

The method for manufacturing the collector according to an embodiment of the present invention includes mixing a solvent, a fluorine-based polymer binder, and a conductive material to prepare an adhesion enhancing slurry (S1), and applying the adhesion enhancing slurry on at least one surface of a conductive metal and drying the slurry (S2), and in the step of S1, the fluorine-based polymer binder and the conductive material are mixed in a weight ratio of 3:1 to 1:2, and in the step of S2, the drying may be performed at a temperature higher than a melting point of the fluorine-based polymer binder.

The step of S1 is preparing an adhesion enhancing slurry for forming an adhesion enhancing layer, and may be performed by mixing a solvent, a fluorine-based polymer binder, and a conductive material, and a water-soluble binder may be further used as needed.

In this case, the fluorine-based polymer binder, the water-soluble binder, and the conductive material are as described above.

The solvent may be a solvent commonly used in the art, and may be dimethyl sulfoxide (DMSO), isopropyl alcohol, N-methylpyrrolidone (NMP), dimethylformamide (DMF), ethylalcohol, methylalcohol, n-propyl alcohol, ethyl acetate, methylethylketone (MEK), methyl isobutyl ketone, MIBK), acetone, water, or the like, and any one thereof or a mixture of two or more thereof may be used. As another example, the solvent may be water, and among the solvents, a hydrophilic solvent may be used along with water as needed. In this case, the drying may be performed more easily, and it may be beneficial for the prepared adhesion enhancing layer to have a diiodomethane contact angle within the above-described specific range, and when a lithium secondary battery of a positive electrode including the adhesion enhancing layer is applied, the dissolution resistance to an electrolyte may be excellent to significantly suppress deintercalation even in a state of being immersed in the electrolyte, and adhesion to the positive electrode active material layer and interfacial resistance may remain excellent.

The amount of the solvent to be used is sufficient if the solvent may dissolve or disperse the fluorine-based polymer binder, the water-soluble binder, and the conductive material, and thereafter, have a viscosity which may exhibit excellent thickness uniformity upon application for preparing a collector. Herein, the adhesion enhancing slurry may have a viscosity of 400 cps to 700 cps, specifically 450 cps to 600 cps or 450 cps to 550 cps, and in this case, the adhesion enhancing slurry may be easily applied on the conductive metal in a uniform thickness, and it may be beneficial for improvement in adhesion and interfacial resistance of the formed adhesion enhancing layer in a balanced manner. In this case, the viscosity was measured at 25 °C.

In addition, the fluorine-based polymer binder and the conductive material may be mixed in a weight ratio of 3:1 to 1:2, specifically, 2.7:1 to 1:2, 2.5:1 to 1:2, or 2:1 to 1:2, and in this case, it may be beneficial for the surface roughness and diiodomethane contact angle of the formed adhesion enhancing layer to satisfy the above conditions.

As another example, the fluorine-based polymer binder and the water-soluble binder may be mixed in a weight ratio of 20:1 to 1:1 or 10:1 to 1:1, and in this case, it may be beneficial for improvement in adhesion and interfacial resistance of the formed adhesion enhancing layer in a balanced manner.

The step of S2 is manufacturing a collector including an adhesion enhancing layer, and may be performed by applying the prepared adhesion enhancing slurry onto at least one surface of the conductive metal and drying the resulting product.

The applying may be performed through a generally known method of applying a slurry onto a conductive metal, and for example, methods such as bar coating, gravure coating, gap coating, comma coating, 2-roll reverse coating, and slot die coating may be performed. In this case, the applying is performed such that the adhesion enhancing layer is uniformly formed on a conductive metal, but the adhesion enhancing layer is formed not to cover the entire conductive metal but to expose a portion of the conductive metal, and this may be one that the fluorine-based polymer binder and the conductive material in the adhesion enhancing slurry are in the form of particles to be applied in the form of an island, and accordingly, the adhesion enhancing layer may be formed in a dot shape to expose a portion of the conductive metal. Accordingly, appropriate interfacial resistance between the collector and the positive electrode active material layer may be obtained.

In addition, the applying may be performed using an appropriate amount, so that the thickness of the adhesion enhancing layer is within the range described above.

As another example, the applying may be applying in a loading amount of 100 mg to 1100 mg of the adhesion enhancing slurry per surface area (1 m²) of the conductive metal. In this case, an adhesion enhancing layer having the thickness described above may be easily formed, and may be uniformly applied in an appropriate amount onto the entire surface of the conductive metal, and through a drying process, it may be more beneficial in obtaining an adhesion enhancing layer having surface roughness, diodomethane contact angle, and element ratio on an outermost surface within the above ranges.

In addition, the drying may be performed at a temperature higher than a melting point of the fluorine-based polymer binder, and specifically, the drying may be performed at a temperature of 100 °C to 170 °C, but at a temperature higher than the melting point of the fluorine-based polymer binder. More specifically, the drying may be performed at a temperature of 110 °C to 170 °C but at a temperature higher than the melting point of the fluorine-based polymer binder for 1 minute to 5 minutes. In this case, the fluorine-based polymer binder is melted during the drying process, and then solidified as the temperature decreases after the drying to be distributed over the entire surface of the conductive metal, but may be formed into a dot-shaped adhesion enhancing layer, and with respect to the collector manufactured therefrom, the entire surface of the conductive metal is not covered with the adhesion enhancing layer and is partially exposed, and accordingly, when applied to a positive electrode, the adhesion between the conductive metal and the positive electrode active material layer may be improved and also low interfacial resistance may be achieved.

### Positive electrode

The present invention provides a positive electrode including the collector described above.

The positive electrode according to an embodiment of the present invention includes the collector, and a positive electrode active material layer, and the positive electrode active material layer may be provided on a surface provided with an adhesion enhancing layer of the collector.

In addition, the positive electrode active material layer may include a positive electrode active material, and the positive electrode active material may be one type selected from the group consisting of LiCoO₂, LiCoPO₄, LiNiO₂, LiₓNiₐCo_{b}M¹_{c}M²_{d}O₂ (M¹ and M² are each independently one type selected from the group consisting of Al, Mn, Cu, Fe, V, Cr, Mo, Ga, B, W, Mo, Nb, Mg, Hf, Ta, La, Ti, Sr, Ba, Ce, F, P, S, and Y, and 0.9≤x≤1.1, 0<a<1.0, 0<b<1.0, 0≤c<0.5, 0≤d<0.5, and a+b+c+d=1 are satisfied), LiMnO₂, LiMnO₃, LiMn₂O₃, LiMn₂O₄, LiMn₂₋ₑM³ₑO₂ (M³ is at least one type selected from the group consisting of Co, Ni, Fe, Cr, Zn, and Ta, and 0.01≤e≤0.1 is satisfied), Li₂Mn₃M⁴O₈ (M⁴ is at least one selected from the group consisting of Co, Ni, Fe, Cu, and Zn), LiFePO₄, Li₂CuO₂, LiV₃O₈, V₂O₃, Cu₂V₂O₇, and lithium metal.

As another example, the positive electrode active material layer may include lithium iron phosphate oxide, and the lithium iron phosphate oxide may be LiFePO₄.

Meanwhile, the positive electrode according to an embodiment of the present invention may be manufactured through a commonly known dry electrode manufacturing method.

For example, a dry electrode film for forming a positive electrode active material layer is placed on the collector and roll pressed to manufacture the positive electrode, and in this case, the film for forming a positive electrode active material layer does not contain a solvent, may include a conductive material and a binder along with the positive electrode active material, and may further include a dispersant, an additive, an aqueous binder, and the like, when needed. In addition, the film used in the dry electrode manufacturing method without such a solvent is called a freestanding dry electrode film, and this freestanding dry electrode film may be prepared according to a commonly known method as described in International Publication Nos. WO2019/103874 and WO2019/191397.

As used herein, the 'dry electrode film' does not include detectable processing solvents, residues of processing solvents, or impurities of processing solvents, and unlike a wet electrode film, the dry electrode film indicates an electrode film manufactured through a dry manufacturing method without using a solvent, and the dry manufacturing method indicates a process that does not or substantially does not use a solvent in the manufacture of an electrode film. That is, the method indicates a process of manufacturing in the form of a film using a mixture of a dry electrode active material and a dry binder, instead of manufacturing in the form of a slurry using a solvent.

### Lithium secondary battery

The present invention provides a lithium secondary battery including the positive electrode described above.

According to an embodiment of the present invention, the lithium secondary battery may include the positive electrode, a negative electrode, a separator interposed between the positive electrode and the negative electrode, and an electrolyte. In addition, the lithium secondary battery may selectively further include a battery case for accommodating an electrode assembly composed of the positive electrode, the negative electrode, and the separator, and a sealing member for sealing the battery case.

According to an embodiment of the present invention, the negative electrode may include a negative electrode collector and a negative electrode active material layer positioned on the negative electrode collector.

According to an embodiment of the present invention, the negative electrode collector is not particularly limited as long as it has a high conductivity without causing a chemical change in a battery, and for example, copper, stainless steel, aluminum, nickel, titanium, baked carbon, copper or stainless steel that is surface-treated with one of carbon, nickel, titanium, silver, and the like, an aluminumcadmium alloy, and the like may be used. In addition, the negative electrode collector may typically have a thickness of 3 um to 500 µm, and as in the case of the positive electrode collector, fine irregularities may be formed on a surface of the negative electrode collector to improve the adhesion of the negative electrode active material. For example, the negative electrode collector may be used in various forms such as a film, a sheet, a foil, a net, a porous body, a foam body, and a non-woven fabric body.

According to an embodiment of the present invention, the negative electrode active material layer may optionally include a binder and a conductive material in addition to the negative electrode active material.

According to an embodiment of the present invention, a compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO_{β} (0 < β < 2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used. In addition, a metallic lithium thin film may be used as the negative electrode active material. Additionally, as a carbon material, low-crystalline carbon, high-crystalline carbon, and the like may all be used. Typical examples of the low-crystalline carbon may be soft carbon and hard carbon, and typical examples of the high-crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and hightemperature fired carbon such as petroleum or coal tar pitch derived cokes. The negative electrode active material may be included in an amount of 80 wt% to 99 wt% with respect to a total weight of the negative electrode active material layer.

According to an embodiment of the present invention, a binder of the negative electrode active material layer is a component that assists in binding between a conductive material, an active material, and a collector, and may be commonly added in an amount of 0.1 wt% to 10 wt% with respect to the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

According to an embodiment of the present invention, a conductive material of the negative electrode active material layer is a component for further improving the conductivity of a negative electrode active material, and may be added in an amount of 10 wt% or less, preferably 5 wt% or less, with respect to the total weight of the negative electrode active material layer. The conductive agent is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; metal powder such as aluminum powder, and nickel powder; conductive whiskers such as zinc oxide whiskers and potassium titanate whiskers; conductive metal oxide such as titanium oxide; or polyphenylene derivatives, or the like may be used.

According to an embodiment of the present invention, the negative electrode may be manufactured by applying a composition for forming a negative electrode active material layer, which is prepared by dissolving or dispersing a negative electrode active material and optionally a binder and a conductive material in a solvent, on a negative electrode collector, followed by drying, or may be manufactured by casting a composition for forming a negative electrode active material layer on a separate support and then laminating a film separated from the support on the negative electrode collector. As another example, the negative electrode may be manufactured through a typical dry electrode manufacturing method as in the positive electrode described above.

According to an embodiment of the present invention, the separator is to separate the negative electrode and the positive electrode and to provide a movement path for lithium ions, and any separator may be used without particular limitation as long as it is typically used as a separator in a lithium secondary battery, and particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer component may be used to secure heat resistance or mechanical strength, and the separator having a single layer or multilayer structure may be used.

According to an embodiment of the present invention, as the electrolyte, an organic liquid electrolyte, an inorganic liquid electrolyte, a solid polymer electrolyte, a gel-type polymer electrolyte, an inorganic solid electrolyte, a moltentype inorganic electrolyte, or the like that is usable in the manufacture of a lithium secondary battery may be used without particular limitation. As a specific example, the electrolyte may include an organic solvent and a lithium salt.

According to an embodiment of the present invention, any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where Ra is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

According to an embodiment of the present invention, any compound may be used as the lithium salt without particular limitation as long as it may provide lithium ions used in a lithium secondary battery. To be specific, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used. The lithium salt may be preferably used in a concentration range of 0.1 M to 2.0 M. When the concentration of the lithium salt is in the above range, the electrolyte has suitable conductivity and viscosity, thereby exhibiting excellent performance, and lithium ions may effectively move.

According to an embodiment of the present invention, in addition to the above-described electrolyte components, for example, at least one additive selected from the group consisting of vinylene carbonate (VC), vinyl ethylene carbonate (VEC), fluoro ethylene carbonate (FEC), propane sultone (PS), 1,3-propane sultone (PRS), ethylene sulfate (Esa), succinonitrile (SN), adiponitrile (AN), hexane tricarbonitrile (HTCN), γ -butyrolactone, biphenyl (BP), cyclohexyl benzene (CHB), and tert-amyl benzene (TAB), or at least one additive such as a haloalkylene carbonate-based compound such as difluoroethylene carbonate, pyridine, triethylphosphite, triethanolamine, a cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, or aluminum trichloride may be further included in the electrolyte for the purpose of enhancing the lifetime characteristics of batteries, suppressing a reduction in battery capacity, enhancing the discharge capacity of batteries, and the like. In this case, the additive may be included in an amount of 0.1 wt% to 5 wt% with respect to a total weight of the electrolyte.

The lithium secondary battery including the positive electrode according to the present invention stably exhibits excellent capacity properties, output properties, and lifespan properties, and thus, are useful for portable devices such as a mobile phone, a notebook computer, and a digital camera, and in the field of electric cars such as a hybrid electric vehicle (HEV) and an electric vehicle (EV).

The outer shape of the lithium secondary battery of the present invention is not particularly limited, and thus a cylindrical shape using a can, a prismatic shape, a pouch shape, or a coin shape, may be used.

The lithium secondary battery according to the present invention may be used in a battery cell which is used as a power source for a small-sized device, and may also be preferably used as a unit cell for a medium- and large-sized battery module including a plurality of battery cells.

Accordingly, according to an embodiment of the present invention, a battery module including the lithium secondary battery as a unit cell, and a battery pack including the same are provided.

According to an embodiment of the present invention, the battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

### Example

### Experiment data I

### Example 1

### (1) Manufacture of a collector

Polymer A (vinylidene fluoride-hexafluoropropylene copolymer (PVDF-co-HFP, VDF: HFP = 3: 1 weight ratio) (Solvey, average particle diameter: 250 nm spherical particles, Tm = 100 °C, Mw = 1,080,000 g/mol) as a binder, and Denka carbon black (BET=60 m²/g, DBP=200 ml/100 g) as a conductive material were dispersed in water in a weight ratio of 2:1, and then Daicel 2200 as a thickener was added at a weight of 1/5 with respect to the weight of the binder to prepare an adhesion enhancing slurry, which is an aqueous slurry with a solid content of 10 wt%.

Using a micro gravure coater, the prepared adhesion enhancing slurry was applied to both sides of a 20 um-thick aluminum foil, so that it amounted to 503 mg per area (1 m²) of the aluminum foil, and then dried at 120 °C for 3 minutes to form an adhesion enhancing layer (average thickness: 200 nm) on the aluminum foil.

### (2) Manufacture of a positive electrode

A dry positive electrode active material slurry in which LiFe(PO₄), polyvinylidene fluoride (Mw = 630,000 g/mol) as a binder, and Denka carbon black (BET = 60 m²/g, DBP = 200 ml/100 g) as a conductive material were mixed in a weight ratio of 96:2:2 was applied onto the adhesion enhancing layer, dried at 140 °C for 10 minutes, and then roll pressed to prepare a positive electrode.

### (3) Manufacture of a lithium secondary battery

Lithium metal was used as a negative electrode and a separator (Celgard) was interposed between the positive electrode and the negative electrode and stacked to manufacture an electrode assembly. The electrode assembly was punched out into a coin shape, and an electrolyte in which 1 M LiPF₆ was dissolved in a mixed solvent of propylene carbonate (PC), ethylmethyl carbonate (EMC), and ethylene carbonate (EC) (PC:EMC:EC=3:4:3) was injected to manufacture a lithium secondary battery for testing.

### Example 2

With respect to Example 1, a collector, a positive electrode, and a lithium secondary battery were manufactured in the same manner as in Example 1, except that, using a micro gravure coater, an adhesion enhancing slurry was applied so that it amounted to 632 mg per area (1 m²) of the aluminum foil to form an adhesion enhancing layer (average thickness: 300 nm) .

### Example 3

With respect to Example 1, a collector, a positive electrode, and a lithium secondary battery were manufactured in the same manner as in Example 1, except that, using a micro gravure coater, an adhesion enhancing slurry was applied so that it amounted to 815 mg per area (1 m²) of the aluminum foil to form an adhesion enhancing layer (average thickness: 400 nm) .

### Comparative Example 1

With respect to Example 1, a collector, a positive electrode, and a lithium secondary battery were manufactured in the same manner as in Example 1, except that when preparing an adhesion enhancing slurry, polymer A and Denka carbon black were dispersed in water at a weight ratio of 10:1, and, using a micro gravure coater, the adhesion enhancing slurry was applied so that it amounted to 245 mg per area (1 m²) of the aluminum foil to form an adhesion enhancing layer (average thickness: 200 nm).

### Comparative Example 2

With respect to Example 1, a collector, a positive electrode, and a lithium secondary battery were manufactured in the same manner as in Example 1, except that when preparing an adhesion enhancing slurry, polymer A and Denka carbon black were dispersed in water at a weight ratio of 1:3, and, using a micro gravure coater, the adhesion enhancing slurry was applied so that it amounted to 1122 mg per area (1 m²) of the aluminum foil to form an adhesion enhancing layer (average thickness: 500 nm).

### Comparative Example 3

### (1) Manufacture of a collector

Polymer B (vinylidene fluoride-hexafluoropropylene copolymer (PVDF-co-HFP, VDF:HFP=3:1 weight ratio) (Solvey, Tm = 168 °C, Mw = 880,000 g/mol) as a binder, and Denka carbon black (BET=60 m²/g, DBP=200 ml/100 g) as a conductive material were dispersed in water in a weight ratio of 2:1 to prepare an adhesion enhancing slurry, which is an aqueous slurry with a solid content of 10 wt%.

Using a micro gravure coater, the adhesion enhancing slurry prepared in the above preparation example was applied to both sides of a 20 um-thick aluminum foil, so that it amounted to 429 mg per area (1 m²) of the aluminum foil, and then dried at 120 °C for 3 minutes to manufacture a collector in which an adhesion enhancing layer (average thickness: 200 nm) was formed on the aluminum foil.

### (2) Manufacture of a positive electrode and a lithium secondary battery

With respect to Example 1, a positive electrode and a lithium secondary battery were manufactured in the same manner as in Example 1, except that the collector prepared in (1) was used as a collector.

### Experimental Example 1

The shape, surface roughness, contact angle, and element amount of an adhesion enhancing layer of each collector prepared in Examples 1 to 3 and Comparative Examples 1 to 3 were measured, and the results are shown in FIG. 1 and Table 1 below.

### (1) Form of adhesion enhancing layer

Each collector in which an adhesion enhancing layer was formed was cut into 5 × 5 mm (width × length) to prepare samples and the samples were measured using an SEM (scanning electrom microscope, JSM7610F, Jeol Ltd.). A carbon tape was attached on an SEM sample holder, and then the sample was placed thereon with the adhesion enhancing layer facing upward, and a surface was observed after setting the measurement conditions WD (working distance) to 8 mm, 5 kV, 20 mA at 2000x to 10000x magnification in which particles are clearly visible.

### (2) Surface roughness (Ra, nm)

Using a laser microscope (VK-X100k, Keyence Co.), Ra for an entire area was measured by focusing on a surface of an adhesion enhancing layer at 150x magnification, and then performing laser scanning in an auto measure mode, setting the measurement standard in accordance with JIS B0601:2001, and selecting all areas as a measurement area. Ra was measured at 10 places on the surface of the adhesion enhancing layer by moving the sample measurement location, and the results were presented as an average value.

### (3) Diiodomethane contact angle

The diiodomethane contact angle was measured and analyzed using a contact angle analyzer (KRUSS DSA100) and a dedicated measurement program (ADVANCE Software). Specifically, 3 µl of diiodomethane was placed on an adhesion enhancing layer in the form of droplets, and the angle between the adhesion enhancing layer and diiodomethane was measured at intervals of 1 second for 10 seconds without delay. In the same manner, the location was changed to measure the angle between the adhesion enhancing layer and diiodomethane. The contact angle was measured for a total of 5 locations, and the results were presented as an average value. Meanwhile, upon the measurement, the orientation was set to sessile drop, the measurement method was set to Ellipse (Tangent-1), and the reference line was set to manual baseline.

### (4) Element amount (wt%)

The element amount (wt%)) of the outermost surface of the surface provided with the adhesion enhancing layer was measured through SEM-EDS analysis using FESEM (JSM7610F, Jeol Ltd.).

**[Table 1]**

| Item | | Example | | | Comparative Example | | |
|---|---|---|---|---|---|---|---|
| | | 1 | 2 | 3 | 1 | 2 | 3 |
| Surface roughness (Ra, nm) | | 119 | 252 | 522 | 82 | 610 | 278 |
| Contact angle (°) | | 98 | 103 | 105 | 95 | 82 | 69 |
| Element amount (wt%) | C | 42.24 | 48.02 | 44.19 | 55.46 | 64.85 | 43.55 |
| | F | 2.91 | 6.16 | 3.23 | 7.47 | 0.62 | 4.34 |
| | O | 1.78 | 4.48 | 2.27 | 2.41 | 2.06 | 1.69 |
| | A1 | 53.07 | 41.34 | 50.31 | 34.66 | 32.47 | 50.42 |
| F/A1 weight ratio | | 0.055 | 0.149 | 0.064 | 0.216 | 0.019 | 0.086 |

As shown in Table 1, it is seen that Examples 1 to 3 had a surface roughness (Ra) of 90 nm to 600 nm and a diiodomethane contact angle of 70° to 120°. On the other hand, in Comparative Examples 1 to 3, the surface roughness (Ra) is out of 90 nm to 600 nm, or the contact angle is out of 70° to 120°, and thus Comparative Examples 1 to 3 failed to concurrently satisfy the surface roughness (Ra) and the contact angle in the specific range proposed in the present invention.

As shown in FIG. 1, it is seen that the adhesion enhancing layer of the collector of Example 1 was formed in the form of an island (or dots) that were distributed over the entire surface of an aluminum foil but did not cover the entire surface.

### Experimental Example 2

Adhesion and interfacial resistance between the collector and the positive electrode active material layer of each positive electrode of Examples 1 to 3 and Comparative Examples 1 to 3 were measured, and the results are shown in Table 2 below.

### (1) Measurement of adhesion

Adhesion was measured using a Texture Analyzer (TA analyzer, Lloyd Co.). The measurement mode was set to a 90° peel test reciprocating mode, the movement speed upon measurement was set to 100 mm/min, the measurement length was set to 50 mm, and the speed to return to an original position after measurement was set to 300 mm/min.

Samples were prepared by punching each positive electrode into 2 cm × 10 cm (width × length). Using glass as a base plate (2.5 cm × 7.5 cm × 1 mm) (width × length × thickness), and double-sided tape (3M) was attached to the glass, and then a short side of the sample was positioned to coincide with an end of the short side of the glass substrate, and the double-sided tape and one side of the sample were bonded. In this case, a sample attached to the other short side of the glass substrate is separated by about 5 mm, and fixed to a TA sample stand so that a glass surface of the glass substrate to which the sample was not attached faced downward, and one end of the sample not attached to the double-sided tape was placed perpendicular to the glass substrate and fixed to the TA sample holder. When measuring adhesion, a pulley was connected so that the angle of the sample standing vertically remained 90° with the glass substrate (bottom surface) to measure the adhesion.

### (2) Measurement of electrolyte resistance adhesion (measurement of wet adhesion)

Each positive electrode was stored at 130 °C for 24 hours using a vacuum drying oven to remove moisture, and sealed in an aluminum pouch along with an electrolyte. The sealed product was stored for 2 weeks in an oven at 70 °C, and then adhesion was measured in the same manner as above. In this case, the sample was washed for 5 minutes at room temperature using a DMC washing solution to remove residual electrolyte, and completely dried (70 °C, 10 minutes) and then used.

### (3) Measurement of interfacial resistance

Interfacial resistance was measured using an MP Tester (XF-057, Hioki E.E. Co., Japan). A sample was prepared by punching out each positive electrode to 5 cm × 5 cm (width × height), and a positive electrode active material layer was fixed to face upward to the sample measuring portion, a thickness of the sample (positive electrode), a thickness of an aluminum foil, and a specific resistance value (2.82×10⁻⁶ Qcm) of a collector were each input and measured by setting the conditions to 100 *µ*A, slow speed, 0.5 V, and 30 times of max iteration number. Each measurement was performed three times, and an average value thereof was obtained to show a result value.

**[Table 2]**

| Item | Example | | | Comparative Example | | |
|---|---|---|---|---|---|---|
| | 1 | 2 | 3 | 1 | 2 | 3 |
| Adhesion (gf/2cm) | 73.1 | 80.2 | 83.7 | 27.8 | 38.5 | 48.9 |
| Electrolyte resistance adhesion (gf/2cm) | 108.6 | 98.7 | 107.1 | NG | 15.7 | 3.8 |
| Interfacial resistance (Ωcm²) | 0.42 | 0.22 | 0.21 | 0.28 | 0.59 | 0.54 |

As shown in Table 2, it is seen that Examples 1 to 3 had significantly greater adhesion and lower interfacial resistance than Comparative Examples 1 to 3. In addition, even in the case of the electrolyte resistance adhesion measured after immersion in an electrolyte, it is seen that Comparative Examples 1 to 3 were shown to be deintercalated or to have rapidly reduced adhesion, whereas Examples 1 to 3 were shown to have significantly excellent properties without any degradation in adhesion.

### Experiment data II

### Example 4

### (1) Manufacture of a collector and a positive electrode

Polymer A (vinylidene fluoride-hexafluoropropylene copolymer (PVDF-co-HFP, VDF: HFP = 3: 1 weight ratio) (Solvey, average particle diameter: 250 nm spherical particles, Tm = 100 °C, Mw = 1,080,000 g/mol) as a binder, and Denka carbon black (BET=60 m²/g, DBP=200 ml/100 g) as a conductive material were dispersed in water in a weight ratio of 2.3:1, and then Daicel 2200 as a thickener was added at a weight of 1/5 with respect to the weight of the binder to prepare an adhesion enhancing slurry, which is an aqueous slurry with a solid content of 10 wt%.

Using a micro gravure coater, the prepared adhesion enhancing slurry was applied to both sides of a 20 um-thick aluminum foil, so that it amounted to 653 mg per area (1 m²) of the aluminum foil, and then dried at 110 °C for 2 minutes to manufacture a collector in which an adhesion enhancing layer (average thickness: 350 nm) was formed.

Thereafter, an LFP film was stacked on both sides of the adhesion enhancing layer so as to be in contact with the adhesion enhancing layer, and then roll pressed at 150 °C to manufacture a positive electrode having an active material layer on both sides thereof.

### (2) Manufacture of a lithium secondary battery

Lithium metal was used as a negative electrode and a separator (Celgard) was interposed between the positive electrode and the negative electrode and stacked to manufacture an electrode assembly. The electrode assembly was punched out into a coin shape, and an electrolyte in which 1 M LiPF₆ was dissolved in a mixed solvent of propylene carbonate (PC), ethylmethyl carbonate (EMC), and ethylene carbonate (EC) (PC:EMC:EC=3:4:3) was injected to manufacture a lithium secondary battery for testing.

### Example 5

With respect to Example 4, a collector, a positive electrode, and a lithium secondary battery were manufactured in the same manner as in Example 4, except that, using a micro gravure coater, an adhesion enhancing slurry was applied so that it amounted to 970 mg per area (1 m²) of the aluminum foil to form an adhesion enhancing layer (average thickness: 500 nm) .

### Example 6

With respect to Example 4, a collector, a positive electrode, and a lithium secondary battery were manufactured in the same manner as in Example 4, except that when preparing an adhesion enhancing slurry, polymer A and Denka carbon black were dispersed in water at a weight ratio of 2:1 to prepare an adhesion enhancing slurry, and, using a micro gravure coater, the adhesion enhancing slurry was applied so that it amounted to 892 mg per area (1 m²) of the aluminum foil to form an adhesion enhancing layer (average thickness: 400 nm).

### Example 7

With respect to Example 6, a collector, a positive electrode, and a lithium secondary battery were manufactured in the same manner as in Example 6, except that, using a micro gravure coater, an adhesion enhancing slurry was applied so that it amounted to 1019 mg per area (1 m²) of the aluminum foil to form an adhesion enhancing layer (average thickness: 500 nm).

### Comparative Example 4

With respect to Example 4, a collector, a positive electrode, and a lithium secondary battery were manufactured in the same manner as in Example 4, except that, using a micro gravure coater, an adhesion enhancing slurry was applied so that it amounted to 217 mg per area (1 m²) of the aluminum foil to form an adhesion enhancing layer (average thickness: 100 nm) .

### Comparative Example 5

With respect to Example 4, a collector, a positive electrode, and a lithium secondary battery were manufactured in the same manner as in Example 1, except that, using a micro gravure coater, an adhesion enhancing slurry was applied so that it amounted to 1404 mg per area (1 m²) of the aluminum foil to form an adhesion enhancing layer (average thickness: 1500 nm) .

### Comparative Example 6

With respect to Example 4, a collector, a positive electrode, and a lithium secondary battery were manufactured in the same manner as in Example 4, except that, using a micro gravure coater, an adhesion enhancing slurry was applied to both sides of a 20 um-thick aluminum foil, so that it amounted to 1028 mg per area (1 m²) of the aluminum foil, and then dried at 60 °C for 4 minutes to manufacture a collector in which an adhesion enhancing layer (average thickness: 500 nm) was formed.

### Comparative Example 7

### (1) Preparation of an adhesion enhancing slurry

Polymer A (vinylidene fluoride-hexafluoropropylene copolymer (PVDF-co-HFP, VDF: HFP = 3: 1 weight ratio) (Solvey, average particle diameter: 250 nm spherical particles, Tm = 100 °C, Mw = 1,080,000 g/mol) as a binder, and Denka carbon black (BET=60 m²/g, DBP=200 ml/100 g) as a conductive material were dispersed in water in a weight ratio of 1:2.5, and then Daicel 2200 as a thickener was added at a weight of 1/5 with respect to the weight of the binder to prepare an adhesion enhancing slurry, which is an aqueous slurry with a solid content of 7 wt%.

### (2) Manufacture of a collector and a positive electrode

Using a micro gravure coater, the prepared adhesion enhancing slurry was applied to both sides of a 20 um-thick aluminum foil, so that it amounted to 944 mg per area (1 m²) of the aluminum foil, and then dried at 110 °C for 2 minutes to manufacture a collector in which an adhesion enhancing layer (average thickness: 400 nm) was formed. Thereafter, an LFP film was stacked on both sides of the adhesion enhancing layer so as to be in contact with the adhesion enhancing layer, and then roll pressed at 150 °C to manufacture a positive electrode having an active material layer on both sides thereof.

### (3) Manufacture of a lithium secondary battery

Lithium metal was used as a negative electrode and a separator (Celgard) was interposed between the positive electrode and the negative electrode and stacked to manufacture an electrode assembly. The electrode assembly was punched out into a coin shape, and an electrolyte in which 1 M LiPF₆ was dissolved in a mixed solvent of propylene carbonate (PC), ethylmethyl carbonate (EMC), and ethylene carbonate (EC) (PC:EMC:EC=3:4:3) was injected to manufacture a lithium secondary battery for testing.

### Comparative Example 8

With respect to Comparative Example 7, a collector, a positive electrode, and a lithium secondary battery were manufactured in the same manner as in Comparative Example 7, except that when preparing an adhesion enhancing slurry, polymer A and Denka carbon black were dispersed in water at a weight ratio of 4:1, and, using a micro gravure coater, the adhesion enhancing slurry was applied so that it amounted to 706 mg per area (1 m²) of the aluminum foil, and then dried at 110 °C for 2 minutes to form an adhesion enhancing layer (average thickness: 500 nm).

### Experimental Example 3

The surface roughness and contact angle of an adhesion enhancing layer of each collector prepared in Examples 4 to 7 and Comparative Examples 4 to 8, and the element amount (wt%) of an outermost surface of a surface provided with the adhesion enhancing layer were measured, and the results are shown in Table 3 below.

The surface roughness, contact angle, and element amount were measured in the same manner as in Experimental Example 1.

**[Table 3]**

| Item | | Example | | | | Comparative Example | | | | |
|---|---|---|---|---|---|---|---|---|---|---|
| | | 4 | 5 | 6 | 7 | 4 | 5 | 6 | 7 | 8 |
| Surface roughnes s (Ra, nm) | | 234 | 278 | 267 | 265 | 92 | 529 | 514 | 647 | 52 |
| Contact angle (°) | | 103 | 98 | 98 | 94 | 78 | 91 | 63 | 82 | 93 |
| Eleme nt amoun t (wt%) | C | 45.2 5 | 42.6 5 | 44.9 9 | 46.2 0 | 14.9 3 | 59.3 4 | 52.9 5 | 58.1 0 | 59.8 4 |
| | F | 6.85 | 7.97 | 5.37 | 5.23 | 1.82 | 5.9 | 7.62 | 0.10 | 9.32 |
| | O | 2.18 | 3.76 | 1.38 | 2.34 | 4.31 | 2.55 | 0.98 | 1.68 | 1.34 |
| | A | 45.7 | 45.6 | 48.2 | 46.2 | 77.6 | 32.2 | 38.4 | 40.1 | 29.5 |
| | 1 | 2 | 2 | 6 | 3 | 5 | 1 | 5 | 2 | |
| F/A1 weight ratio | | 0.15 0 | 0.17 5 | 0.11 1 | 0.11 3 | 0.02 3 | 0.18 0 | 0.19 8 | 0.00 2 | 0.31 6 |

As shown in Table 3, it is seen that in Examples 4 to 7, the amounts of Al element, C element, O element, and F element on the outermost surface of the collector surface provided with the adhesion enhancing layer satisfied the specific range presented in the present invention. Meanwhile, in Comparative Examples 4 to 8, the amounts of Al element, C element, O element, and F element on the outermost surface of the collector surface provided with the adhesion enhancing layer failed to concurrently satisfy the specific conditions presented in the present invention, and in this case, the adhesion enhancing layers of Comparative Examples 4 to 8 were manufactured in a way that the weight ratio of the fluorine-based polymer binder and the conductive material in an adhesion enhancing composition fails to satisfy the conditions presented in the present invention, or the drying temperature fails to satisfy the presented conditions, or the coating amount is applied outside the presented range when forming the adhesion enhancing layer. The above results show that the collector according to the present invention in which the amounts of Al element, C element, O element, and F element on the outermost surface of the collector surface provided with the adhesion enhancing layer satisfy specific conditions may be manufactured through the manufacturing method in which the weight ratio, the drying temperature, and the application amount of the fluorine-based polymer binder and the conductive material presented in the present invention are modulated.

### Experimental Example 4: Evaluation of adhesion and interfacial resistance

Adhesion and interfacial resistance between the collector and the positive electrode active material layer of each positive electrode of Examples 4 to 7 and Comparative Examples 4 to 8 were measured, and the results are shown in Table 4 below.

In this case, the adhesion and the interfacial resistance were measured in the same manner as in Experimental Example 2.

**[Table 4]**

| Item | Example | | | | Comparative Example | | | | |
|---|---|---|---|---|---|---|---|---|---|
| | 4 | 5 | 6 | 7 | 4 | 5 | 6 | 7 | 8 |
| Adhesi on (gf/2c m) | 51.0 | 53.1 | 51.1 | 55.3 | 11.6 | 48.1 | 33.5 | 13.0 | 37.0 |
| Interf acial resist ance (Ωcm²) | 0.64 | 0.50 | 0.51 | 0.39 | 0.23 | 0.94 | 0.81 | 0.43 | 1.29 |

As shown in Table 4, it is seen that Examples 4 to 7 had significantly greater adhesion and lower interfacial resistance than Comparative Examples 4 to 8.

Accordingly, it is seen that the positive electrode including the collector in which the amounts of Al element, C element, O element, and F element are modulated on the outermost surface of the collector surface provided with the adhesion enhancing layer according to the present invention has excellent adhesion and low interfacial resistance, and may thus exhibit excellent battery properties.

## Claims

1. A collector comprising:
a conductive metal layer; and
an adhesion enhancing layer provided on at least one surface of the metal layer,
wherein the adhesion enhancing layer has a surface roughness (Ra) of 90 nm to 600 nm and a diiodomethane contact angle of 70° to 120°.

2. The collector of claim 1, wherein an outermost surface of the surface provided with the adhesion enhancing layer comprises an Al element in an amount of 40 wt% to 75 wt%, a C element in an amount of 20 wt% to 50 wt%, an O element in an amount of 0.5 wt% to 5 wt%, and an F element in an amount of 2 wt% to 10 wt%.

3. The collector of claim 1, wherein an outermost surface of the surface provided with the adhesion enhancing layer comprises an Al element in an amount of 45 wt% to 70 wt%, a C element in an amount of 30 wt% to 50 wt%, an O element in an amount of 1 wt% to 5 wt%, and an F element in an amount of 5 wt% to 10 wt%.

4. The collector of claim 1, wherein a weight ratio of the F element to the Al element in an outermost surface of the surface provided with the adhesion enhancing layer is 0.05 to 0.17 (F element/Al element).

5. The collector of claim 1, wherein the adhesion enhancing layer has a surface roughness (Ra) of 100 nm to 550 nm.

6. The collector of claim 1, wherein the adhesion enhancing layer has a diiodomethane contact angle of 80° to 110°.

7. The collector of claim 1, wherein the adhesion enhancing layer has a thickness of 200 nm or greater and less than 1500 nm.

8. The collector of claim 1, wherein the adhesion enhancing layer has a dot shape.

9. The collector of claim 1, wherein the adhesion enhancing layer comprises a fluorine-based polymer binder and a conductive material.

10. The collector of claim 9, wherein the fluorine-based polymer binder is polyvinylidene fluoride (PVDF) or a vinylidene fluoride-hexafluoropropylene copolymer (PVDF-co-HFP) .

11. The collector of claim 9, wherein the fluorine-based polymer binder is a vinylidene fluoride-hexafluoropropylene copolymer (PVDF-co-HFP), and
the fluorine-based polymer binder comprises a vinylidene fluoride unit and a hexafluoropropylene unit in molecules in a molar ratio of 75:25 to 50:50.

12. A positive electrode comprising:
the collector of claim 1; and
a positive electrode active material layer,
wherein the positive electrode active material layer is provided on a surface provided with an adhesion enhancing layer of the collector.

13. A lithium secondary battery comprising the positive electrode according to claim 12, a negative electrode, a separator interposed between the positive electrode and the negative electrode, and an electrolyte.
